# EUROPÄISCHE PATENTSCHRIFT

(11) **EP 3 476 782 B1**
(45) Veröffentlichungstag und Bekanntmachung des Hinweises auf die Patenterteilung: **30.08.2023**
(21) Anmeldenummer: 18203083.3
(22) Anmeldetag: 29.10.2018
(51) Int. Cl.: B65G 47/91

(54) **VORRICHTUNG ZUM UMSETZEN VON GEGENSTÄNDEN UND VERFAHREN**
DEVICE FOR TRANSFERRING OBJECTS AND METHOD
DISPOSITIF DE MISE EN PLACE DES OBJETS ET PROCÉDÉ

(30) Priorität: 27.10.2017 DE 202017005575 U
(43) Veröffentlichungstag der Anmeldung: 01.05.2019
(73) Patentinhaber: Heino Ilsemann GmbH, 28279 Bremen (DE)
(72) Erfinder: Mann, Walter, 28357 Bremen (DE)
(74) Vertreter: Philipp, Matthias

(56) Entgegenhaltungen:
- EP-A1- 2 042 453
- WO-A1-00/68086
- WO-A1-2008/108338
- DE-U1-202011 110 538

## Beschreibung

Die vorliegende Erfindung betrifft eine Vorrichtung zum Umsetzen von Gegenständen und insbesondere von flachen Gegenständen, wie Blisterverpackungen. Aus dem Stand der Technik sind Vorrichtungen bekannt, die Blisterverpackungen von einem Abgabeplatz auf einen Ablageplatz umsetzen können. Die Patentschrift DE 10 2011 100 353 B4 offenbart eine Vorrichtung nach dem Oberbegriff des Anspruchs 1, die über eine Schwenkachse und einen Linearantrieb eine Greifeinrichtung zwischen dem Abgabeplatz und dem Ablageplatz bewegen kann. Der Ablageplatz ist dabei Teil einer Fördereinrichtung, die aus zwei voneinander beabstandeten Förderbahnen besteht, sodass die Greifeinrichtung sich zwischen den beiden Förderbahnen hindurch bewegen kann und beispielsweise eine oder mehrere Blisterverpackung(en) in einer kontinuierlichen Bewegung übergeben kann.

Aus dem Stand der Technik ergeben sich verschiedene Nachteile. Die Fördereinrichtung erstreckt sich oft über eine vergleichsweise lange Strecke, somit erfordert eine Fördereinrichtung mit zwei beabstandeten Förderbahnen einen hohen Anlagenaufwand. Die Vorrichtung zum Bewegen der Greifeinrichtung lässt außerdem nur beschränkte Bewegungsabläufe zu, sodass die Anlage unflexibel ist und kleine Änderungen, zum Beispiel an dem Abgabeplatz, aufwändige Umbaumaßnahmen notwendig machen können.

WO 2008/108338 A1 offenbart eine Vorrichtung zum Umsetzen eines Gegenstands von einer Bereitstellungsstelle zu einem Ablageplatz, mit:
- einer Bereitstellungsstelle aufweisenden Fördereinrichtung, mittels der die Gegenstände in einer Transportrichtung transportierbar sind,
- einer Greifeinrichtung, die mehrere in zwei parallelen, einen Abstand voneinander aufweisenden Reihen nebeneinander angeordnete Greifelemente aufweist, sich zwischen den Reihen von Greifelementen eine Durchtrittsöffnung in der Greifeinrichtung befindet, die breiter als eine Breite der Fördereinrichtung, orthogonal zur Förderrichtung im Bereich Bereitstellungsstelle gesehen, ist; und
- einer Positioniereinrichtung, mittels der die Greifeinrichtung zum Aufnehmen der Gegenstände an der Bereitstellungsstelle zum Abgeben der Gegenstände am Ablageplatz positionierbar ist,

wobei die Positioniereinrichtung einen um eine erste Schwenkachse schwenkbar gehaltenen ersten Ausleger und einen an dem ersten Ausleger um eine zweite Schwenkachse schwenkbar gelagerten zweiten Ausleger aufweist, wobei die zweite Schwenkachse parallel zu der ersten Schwenkachse angeordnet ist und die Greifeinrichtung an dem zweiten Ausleger um eine dritte Schwenkachse schwenkbar gelagert ist;
wobei durch die Positioniereinrichtung die Reihen von Greifelementen beidseitig der Fördereinrichtung auf jeweils einer Seite der Fördereinrichtung vorbei bewegbar sind, und
wobei die Greifeinrichtung mittels der Positioniereinrichtung zwischen einer ersten Position, in der die Reihen von Greifelementen zum Aufnehmen mindestens eines Gegenstands an der Bereitstellungsstelle dem mindestens einen Gegenstand gegenüber liegen, und einer zweiten Position, in der sich die Reihen von Greifelementen zur Übergabe des oder der Gegenstände an den Ablageplatz bewegbar ist.

Mit der vorliegenden Erfindung soll eine Vorrichtung bereitgestellt werden, mit der Gegenstände, insbesondere flache Gegenstände, insbesondere Blisterverpackungen flexibel und mit geringem Anlagenaufwand von einem Abgabeplatz, bzw. einer Bereitstellungsstelle, an einen von einer Fördereinrichtung gebildeten Ablageplatz bewegt werden können.

Gemäß der vorliegenden Erfindung wird eine Vorrichtung zum Umsetzen von Gegenständen nach Anspruch 1 bereitgestellt. Die Gegenstände, insbesondere flache Gegenstände wie Blisterverpackungen, sind von einer Bereitstellungsstelle zu einem Ablageplatz umsetzbar, mit einer den Ablageplatz aufweisenden bzw. diesen bildenden Fördereinrichtung, mittels der die Gegenstände in einer Transportrichtung abtransportierbar sind. Eine Greifeinrichtung weist mehrere, in zwei Reihen nebeneinander angeordnete Greifelemente auf, wobei jeweils eine Reihe von Greifelementen auf einem von zwei parallelen, in einem gegenseitigen Abstand angeordneten Greiffingern gehalten sein kann. Eine Positioniereinrichtung kann die Greifeinrichtung in einer ersten Position zum Aufnehmen der Gegenstände an der Bereitstellungsstelle und an einer zweiten Position zum Abgeben der Gegenstände am Ablageplatz positionieren. Zwischen den Reihen von Greifelementen der Greifeinrichtung befindet sich eine Durchtrittsöffnung, die eine durch den Abstand zwischen den Greiffingern festgelegte Breite aufweisen kann.

Die beschriebene Erfindung bietet den Vorteil, dass die Greifeinrichtung zwei voneinander beabstandete Reihen von Greifelementen aufweist, um die Gegenstände in einer kontinuierlichen Bewegung umzusetzen. Die Greifeinrichtung ist wesentlich kleiner als die bekannten Fördereinrichtungen, weshalb diese Ausführung einen geringeren Aufwand als beim Stand der Technik verursacht. Die Fördereinrichtung hingegen kann entweder eine einzelne Förderbahn zum Abtransportieren der Gegenstände oder mehrere Förderbahnen, die mit einem geringen Abstand zueinander angeordnet sind, aufweisen. Bei der Übergabe der Gegenstände von der Greifeinrichtung an die Fördereinrichtung werden die Reihen von Greifelementen der Greifeinrichtung beidseitig der Förderrichtung an dieser vorbeigeführt. Dazu sind die Reihen orthogonal zu einer Haltefläche, die durch die Greifelemente gebildet wird, soweit voneinander beabstandet, dass ein Ende der Fördereinrichtung durch die Durchtrittsöffnung der Griffeinrichtung hindurchtreten kann. Bevorzugt ist die Haltefläche der Greifeinrichtung orthogonal zur Bewegungsrichtung der Greifeinrichtung angeordnet, während die Greifeinrichtung an der Fördereinrichtung entlanggeführt wird. Die Reihen von Greifelementen können dabei parallel zur Förderrichtung der Fördereinrichtung verlaufen. Die Breitenrichtung der Durchtrittsöffnung ist dann zweckmäßigerweise parallel zu der Haltefläche und orthogonal zu den Reihen von Greifelementen und der Förderrichtung ausgebildet, so dass die Durchgangsöffnung über das Ende der Fördereinrichtung hinweg bewegt werden kann.

Die Bereitstellungsstelle kann ein Abgabeplatz am Ende einer Fördereinheit sein, an dem die Gegenstände hintereinander oder nebeneinander angeliefert werden, bspw. in Form von Blisterverpackungen. Die bevorzugt flachen Gegenstände können dabei mit ihrer flachen Fläche horizontal liegen, vertikal stehen oder eine beliebige Neigung aufweisen. Die Greifeinrichtung kann die Gegenstände an der Bereitstellungsstelle in der ersten Position aufnehmen, von der Positioniereinrichtung zu der zweiten Position geschwenkt werden und dort die Gegenstände an einem Ablageplatz an die Fördereinrichtung abgeben. Zum Festhalten der Gegenstände kann die Greifeinrichtung zwei Reihen von Saugnäpfen aufweisen, die als Greifelemente dienen. Sind die Greifelemente als Saugnäpfe ausgeführt, kann die Saugkraft über einen Unterdruck erzeugt werden, der zum Aufnehmen der Gegenstände einschaltbar und zum Abgeben der Gegenstände ausschaltbar ist. Alternativ kann die Greifeinrichtung kontinuierlich mit Unterdruck beaufschlagt werden.

Die Fördereinrichtung kann einen oder mehrere Ablageplätze aufweisen, wobei jeder Ablageplatz bevorzugt mehrere Anlagestellen für die Gegenstände aufweist. Auch die Anlagestellen für die Gegenstände können als Saugnäpfe ausgeführt sein. Die Fördereinrichtung kann eine oder mehrere Förderbahnen aufweisen, an denen die Anlagestellen für die Gegenstände ausgebildet sind oder in die die Anlagestellen für die Gegenstände integriert sind. Dabei kann jedes Förderband eine ablageplatzseitige Umlenkeinrichtung aufweisen, über die die Förderrichtung des Förderbandes umgelenkt wird, wobei die Umlenkeinrichtung das Förderband bevorzugt um eine horizontal ausgerichtete Umlenkachse um 180° umlenkt, so dass, wenn eine Anlagestelle in Richtung des Ablageplatzes auf der Oberseite des Förderbandes läuft, sie auf dem Weg vom Ablageplatz weg auf der Unterseite des Förderbandes läuft.

Die Greifeinrichtung kann U-förmig ausgebildet sein, wobei ein Quersteg eine Verbindungsstrebe sein kann, die zwei parallel zueinander angeordnete, stabförmige Elemente der Greifeinrichtung miteinander verbindet, wobei an diesen beiden stabförmigen Elementen, etwa Greiffinger, die Greifelemente angeordnet sind. Die Greifelemente können in den stabförmigen Elementen oder Greiffingern integriert sein. Ein Freiraum zwischen den beiden stabförmigen Elementen der Greifeinrichtung stellt eine Durchtrittsöffnung dar, die mindestens so groß sein muss, dass die Fördereinrichtung durch die Durchtrittsöffnung führbar sind. Dabei wird, wie oben beschrieben, die Greifeinrichtung an den Ablageplätzen vorbei bewegt. Bevorzugt sind die Greifelemente in einem oder mehreren Paaren angeordnet, wobei jedes Paar zwei Greifelemente umfasst, die über die Durchtrittsöffnung hinweg einander gegenüberliegend angeordnet sind.

Zum Bewegen der Greifeinrichtung ist eine Positioniereinrichtung vorgesehen. Die Positioniereinrichtung weist mindestens eine Schwenkachse auf, um die die Greifeinrichtung schwenkbar ist. Bevorzugt ist die oder mindestens eine Schwenkachse orthogonal zur Förderrichtung der Fördereinrichtung ausgerichtet, insbesondere horizontal.

In einer weiteren bevorzugten Ausführungsform der Erfindung sind die Reihen der Greifelemente der Greifeinrichtung der Vorrichtung zur Übergabe der Gegenstände an die Fördereinrichtung parallel zu der Längsachse der Fördereinrichtung ausrichtbar. So kann gewährleistet werden, dass jedem Paar von Greifelementen der Greifeinrichtung eine oder mehrere Aufnahmestellen der Fördereinrichtung zugeordnet sind, die die Gegenstände übernehmen können. Insbesondere bei einer Verwendung von Saugnäpfen ist es vorteilhaft, wenn alle Anlagestellen einen Kontakt zu einer ebenen Fläche der Gegenstände erhalten.

In einer weiteren bevorzugten Ausführungsform der Erfindung weist die Durchtrittsöffnung eine Längsachse auf und die Längsachse ist parallel zu den beiden Reihen der Greifelemente angeordnet und, wenn die Greifeinrichtung sich in der zweiten Position befindet, im Wesentlichen parallel zur Längsachse der Fördereinrichtung.

In einer weiteren Ausführungsform kann die Fördereinrichtung am Ablageplatz mindestens zwei voneinander beabstandete Anlagestellen für die Gegenstände aufweisen. Um einen festen Halt der Gegenstände auf der Fördereinrichtung zu gewährleisten, kann es vorteilhaft sein, zumindest zwei Anlagestellen pro Gegenstand vorzusehen. Bevorzugt stehen diese dazu in einer Reihe nebeneinander in Kontakt mit dem Gegenstand. Im Moment der Übergabe des Gegenstandes von der Greifeinrichtung an die Fördereinrichtung können zwei Anlagestellen der Fördereinrichtung auf einer geraden Linie senkrecht zur Förderrichtung der Fördereinrichtung mit zwei Greifelementen der Greifeinrichtung liegen.

In einer bevorzugten Ausführungsform der Erfindung erstreckt sich die Fördereinrichtung in einer horizontalen Richtung, und die Greifeinrichtung ist durch die Positioniereinrichtung quer dazu, insbesondere vertikal, beispielsweise von unten nach oben, an der Fördereinrichtung vorbei bewegbar.

Die erste Schwenkachse kann zu einer von der Fördereinrichtung festgelegten Anlageebene parallel ausgerichtet sein, und ist bevorzugt senkrecht zu der Längsachse der Fördereinrichtung angeordnet.

Jede der Schwenkachsen kann über einen separaten Antrieb, bevorzugt einen Schrittmotor verfügen, mittels dem eine Schwenkbewegung erzeugbar ist. Alternativ kann ein Antrieb mehrere Ausleger und/oder die Greifeinrichtung gleichzeitig antreiben. Bevorzugt ist der Bewegungsablauf dabei durch eine Steuerung festgelegt. Die Steuerung kann dabei in der Hardware implementiert sein, beispielsweise als Getriebe.

Es kann also ein einziger Motor vorgesehen sein, mit dem über ein Getriebe eine zwangsgesteuerte Bewegung des ersten Auslegers, des zweiten Auslegers und/oder der Greifeinrichtung erzeugbar ist.

Die Greifelemente der Greifeinrichtung können mechanische oder magnetische Greifmittel oder Saugmittel sein.

Die Fördereinrichtung kann ein Saugband oder parallel zueinander verlaufende Saugbänder aufweisen. Die Anlagestellen für die Gegenstände an den Saugbändern können in Form von Saugnapfreihen ausgebildet sein können.

Die Greifeinrichtung kann im Wesentlichen U-förmig sein. Dabei können die Reihen der Greifeinrichtung im Wesentlichen parallel zueinander verlaufen und mittels eines Verbindungsstegs miteinander verbunden sein. Der Verbindungssteg weist dabei bevorzugt keine Ablageplätze für Gegenstände auf und wird beim Vorbeiführen der Greifeinrichtung an der Fördereinrichtung an einer Stirnseite oder einem Ende der Fördereinrichtung vorbeigeführt.

In einer bevorzugten Ausführungsform ist die Bereitstellungstelle ein Ende einer Fördereinheit. Alternativ ist sie ein Magazin für die Bereitstellung von Gegenständen. Die Gegenstände können an der Bereitstellungsstelle bevorzugt in einer Ebene angeordnet sein, die orthogonal zu der Anlageebene auf dem Ablageplatz ist.

Ein erfindungsgemäßes Verfahren zum Umsetzen von Gegenständen weist die folgenden Schritte auf:
a) Bereitstellen einer Vorrichtung nach der Erfindung und Bereitstellen der Bereitstellungsstelle (3);
b) Bewegen der Greifeinrichtung (6) zu der Bereitstellungsstelle (3) und Greifen des Gegenstands mittels der Greifeinrichtung (6);
c) Schwenken des ersten Auslegers (18a) um die erste Schwenkachse (10a);
c1) Schwenken eines zweiten Auslegers (18b) um eine zweite Schwenkachse (10b), wobei durch ein koordiniertes Schwenken des ersten Auslegers (18a) und des zweiten Auslegers (18b) eine translatorische Bewegung der Greifeinrichtung (6) bei der Übergabe des Gegenstands (2) von der Greifeinrichtung (6) an die Fördereinrichtung (5) erzeugt wird;
d) Rotieren der Greifeinrichtung (6) um die dritte Schwenkachse (10c);
e) Entlangbewegen der Greifeinrichtung (6) an der Fördereinrichtung (5), wobei eine Reihe (6a) von Greifelementen der Greifeinrichtung (6) auf einer Seite der Fördereinrichtung (5) vorbeigeführt wird und die andere Reihe (6a) auf der gegenüberliegenden Seite,
f) Übergeben des Gegenstands (2) von der Greifeinrichtung (6) an die Fördereinrichtung (5),
g) Abtransportieren des Gegenstands (2) mittels der Fördereinrichtung (5);

Die Erfindung wird nachfolgend anhand eines Ausführungsbeispiels erläutert, wobei auf eine Zeichnung Bezug genommen wird, in der
Fig. 1 eine perspektivische Ansicht einer erfindungsgemäßen Vorrichtung schräg von vorn zeigt,
Fig. 2 die Vorrichtung nach Fig. 1 aus einer ersten Richtung schräg von hinten zeigt,
Fig. 3 die Vorrichtung nach Fig. 1 aus einer zweiten Richtung schräg von hinten zeigt,
Fig. 4a einen Ausschnitt aus einem Arbeitszyklus der Vorrichtung beim Umsetzen eines Gegenstands zeigt,
Fig. 4b einen weiteren Ausschnitt aus einem Arbeitszyklus der Vorrichtung beim Umsetzen eines Gegenstands zeigt,
Fig. 4c einen weiteren Ausschnitt aus einem Arbeitszyklus der Vorrichtung beim Umsetzen eines Gegenstands zeigt,
Fig. 4d einen weiteren Ausschnitt aus einem Arbeitszyklus der Vorrichtung beim Umsetzen eines Gegenstands zeigt,
Fig. 4e einen weiteren Ausschnitt aus einem Arbeitszyklus der Vorrichtung beim Umsetzen eines Gegenstands zeigt und
Fig. 4f einen weiteren Ausschnitt aus einem Arbeitszyklus der Vorrichtung beim Umsetzen eines Gegenstands zeigt.

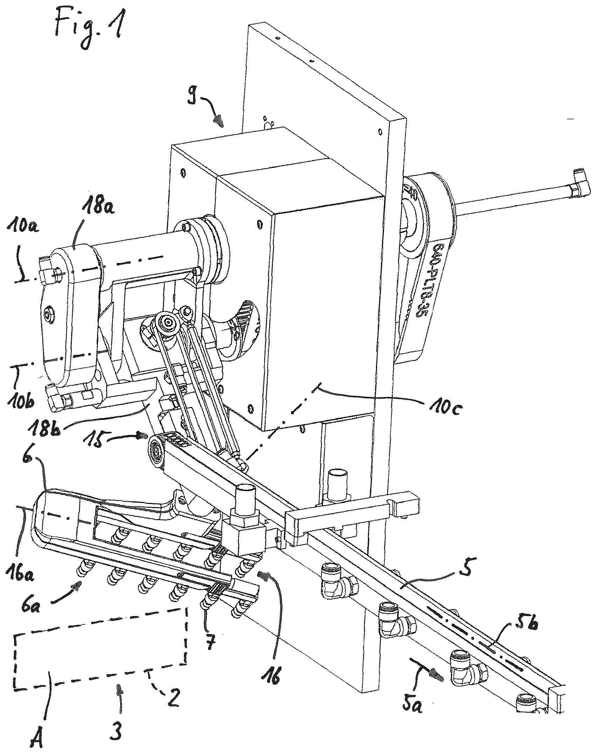

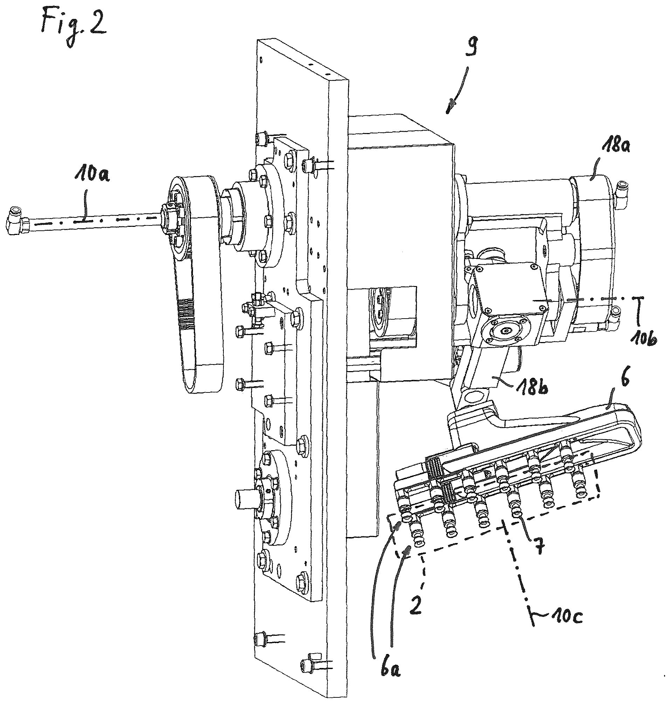

Die erfindungsgemäße Vorrichtung, die in Fig. 1 bis 3 im Einzelnen dargestellt ist, beinhaltet eine im Ganzen U-förmig gestaltete Greifeinrichtung 6, eine Fördereinrichtung 5 und eine Positioniereinrichtung 9, an der die Greifeinrichtung 6 gehalten ist und mit der sie zwischen einer ersten Position und einer zweiten Position verschwenkbar ist.

Die Positioniereinrichtung 9 weist einen um eine erste Schwenkachse 10a schwenkbar gehaltenen ersten Ausleger 18a auf, wobei die erste Schwenkachse 10a ortsfest an einem Grundgestell ausgebildet ist. Der erste Ausleger 18a trägt einen zweiten Ausleger 18b, der um eine zweite Schwenkachse 10b, die an dem ersten Ausleger 18a ausgebildet ist, relativ zu dem ersten Ausleger 18a verschwenkbar ist. Die zweite Schwenkachse 10b ist parallel und in einem vorgegebenen Abstand zu der ersten Schwenkachse 10a angeordnet. An dem zweiten Ausleger 18b ist die Greifeinrichtung 6 um eine dritte Schwenkachse 10c schwenkbar gehalten, wobei die dritte Schwenkachse 10c in einem vorgegebenen Abstand von der und senkrecht zu der ersten Schwenkachse 10a und der zweiten Schwenkachse 10b angeordnet ist.

Zum Bewirken einer Schwenkbewegung des ersten Auslegers 18a um die erste Schwenkachse 10a, des zweiten Auslegers 18b um die zweite Schwenkachse 10b und der Greifeinrichtung 6 um die dritte Schwenkachse 10c kann ein einziger Motor vorgesehen sein, der ein mechanisches Getriebe antreibt, welches mit den Auslegern 18a, 18b und der Greifeinrichtung 6 verbunden ist und eine zwangsgesteuerte Bewegung bewirkt, oder aber es können zwei oder drei Motoren, insbesondere einer je Schwenkachse, zum gesteuerten Antrieb einer gewünschten kombinierten Schwenkbewegung vorgesehen sein. In diesem Fall ist eine Steuerung vorgesehen, mit der die zwei oder drei Motoren verbunden sind und die eine koordinierte Bewegung der Greifeinrichtung 6 zwischen der ersten und der zweiten Position bewirkt.

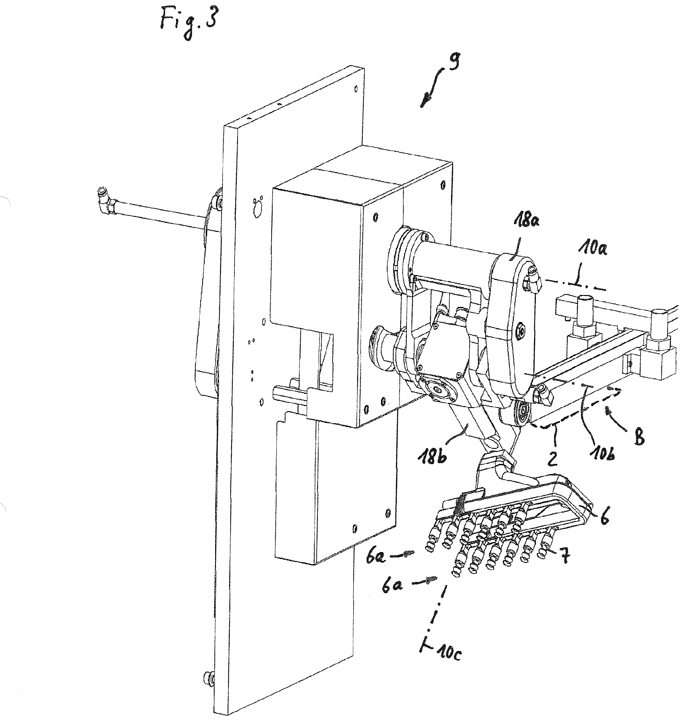

Fig. 1 zeigt angedeutet einen Gegenstand 2, beispielsweise eine Blisterverpackung, wobei der Gegenstand 2 in der ersten Position A dargestellt ist, aus der er in die zweite Position B umzusetzen ist. Fig. 3 zeigt angedeutet einen Gegenstand 2 in der zweiten Position B, in der sich der Gegenstand an der Fördereinrichtung 5 befindet.

Die Greifeinrichtung 6 weist zwei Reihen 6a von Greifelementen 7 auf, die parallel und in einem gegenseitigen Abstand voneinander jeweils auf einem Greiffinger angeordnet sind, wobei eine Durchtrittsöffnung 16 mit einer Längsachse 16a zwischen den Greiffingern gebildet ist. Diese Durchtrittsöffnung oder der Abstand zwischen den Greiffingern ist ausreichend groß, dass die Greifeinrichtung 6 über einen Endabschnitt der Fördereinrichtung 5 hinwegbewegt werden kann, wobei sich der Endabschnitt der Fördereinrichtung 5 zeitweise zwischen den Greiffingern und somit zwischen den Reihen 6a der Greifelemente 7 befindet und ein von der Greifeinrichtung 6 ergriffener Gegenstand 2 beim Vorbeibewegen selbsttätig oder zwangsweise an die Fördereinrichtung 5 übergeben wird. Die Fördereinrichtung ist mit Haltemitteln versehen, beispielsweise mit Saug-, Greif- oder Magnetmitteln, um die Gegenstände zu halten.

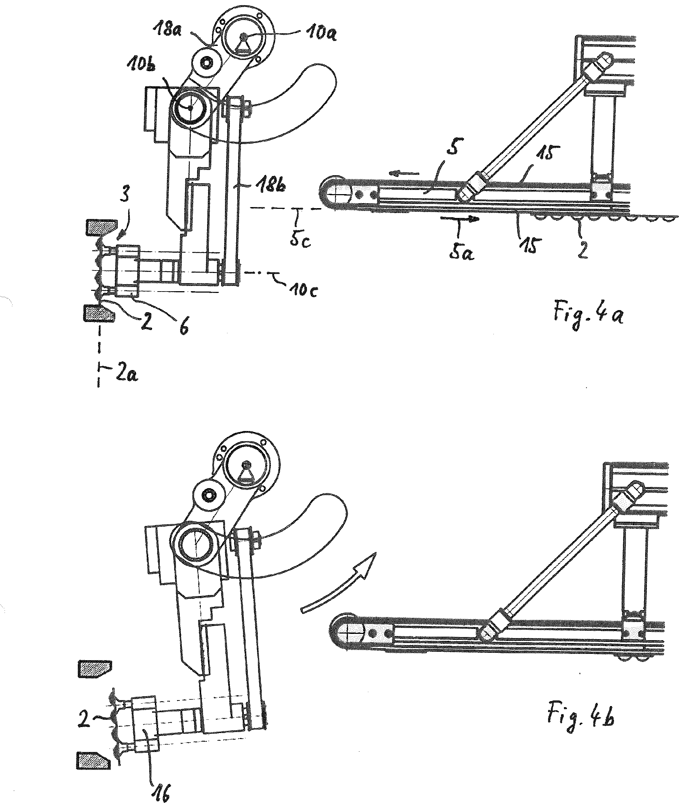

Fig. 4a bis f erläutern das Umsetzen eines Gegenstands mit einer erfindungsgemäßen Vorrichtung von der ersten Position A (Bereitstellungsstelle) in die zweite Position B (Ablageplatz). Beispielhaft wird eine Blisterverpackung als Gegenstand 2 betrachtet, wobei eine Anzahl von Blisterverpackungen der Reihe nach mittels einer nicht näher dargestellten Fördervorrichtung an die erste Position A gefördert und dort bereitgestellt werden. In dem dargestellten Beispiel ergreift die Greifeinrichtung 6 bei jedem Umsetzvorgang einen Gegenstand, wobei sich dieser mit seiner Längsrichtung parallel zu der Längsachse 16a der Durchtrittsöffnung 16 erstreckt, oder mit anderen Worten parallel zu den Reihen 6a der Greifelemente 7 der Greifeinrichtung 6. Alternativ können mehrere Gegenstände in einer zu der dargestellten Orientierung senkrechten Orientierung bereitgestellt und ergriffen werden, wobei die Greifeinrichtung 6 mehrere parallel nebeneinander angeordnete Gegenstände mit quer dazu verlaufender Durchtrittsöffnung gleichzeitig ergreift und umsetzt. Figur 1 bis 3 zeigen sechs Greifelemente je Reihe, so dass bis zu sechs Gegenstände gleichzeitig erfasst und umgesetzt werden konnten. Jeder Gegenstand ist dabei von einem Paar von Greifelementen zu greifen, die sich über die Durchtrittsöffnung hinweg gegenüberliegen.

Figur 4a zeigt die Greifeinrichtung 6 in Kontakt mit einer Blisterverpackung 2 in der ersten Position A. Der zweite Ausleger 18b ist dabei mittels des ersten Auslegers 18a in eine solche Stellung geschwenkt worden, dass die dritte Schwenkachse 10c senkrecht zu einer Ausrichtungsebene 2a der Blisterverpackung 2 orientiert ist, so dass die Greifelemente 7 ebenfalls in der Ausrichtungsebene liegen und diesen gut erfassen können. Die Ausrichtungsebene 2a ist in dem dargestellten Beispiel vertikal und befindet sich senkrecht zu einer von der Fördereinrichtung 5 festgelegten Anlageebene 5c, in der die Gegenstände 2 an die Fördereinrichtung 5 übergeben werden und von der Fördereinrichtung 5 gehalten werden, während sie abtransportiert werden. Die Anlageebene 5c ist bevorzugt horizontal.

Fig. 4b zeigt die Abnahme des Gegenstands 2 aus der ersten Position A und den Beginn einer kombinierten Schwenkbewegung um die erste Schwenkachse 10a und die zweite Schwenkachse 10b, wodurch neben einer reinen Schwenkbewegung auch eine Translationsbewegung der Greifeinrichtung 6 erzeugt wird.

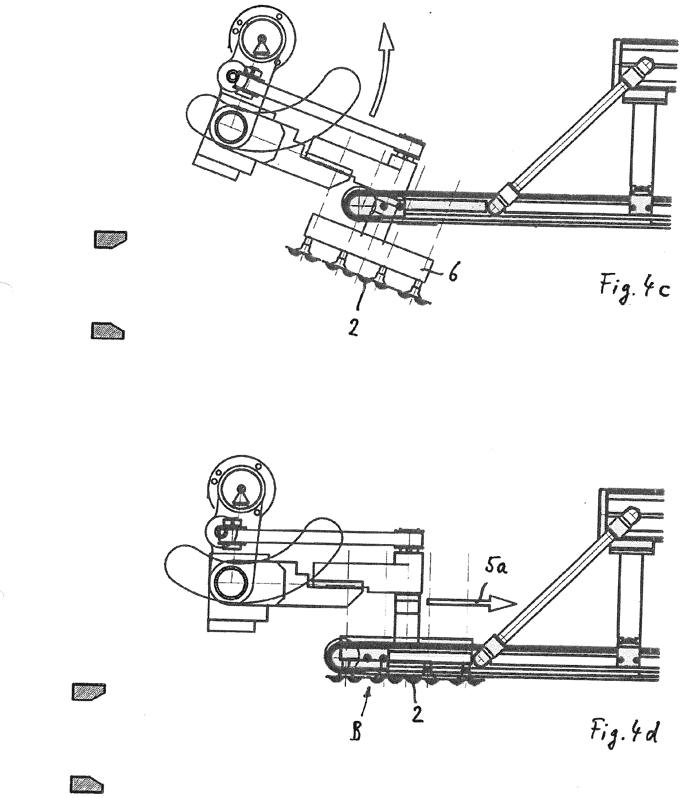

Fig. 4c zeigt eine Drehung der Greifeinrichtung 6 um die dritte Schwenkachse 10c um 90°, so dass die Längsachse 16a der Durchtrittsöffnung 16 der Greifeinrichtung 6 parallel zur Längsachse 5b der Förderreinrichtung 5 verläuft, oder zumindest parallel zu einer vertikalen Ebene, die die Längsachse 5b enthält. Gleichzeitig erfolgt eine weitere Schwenkbewegung um die erste und zweite Schwenkachse.

Fig. 4d zeigt die Übergabe des Gegenstands 2 an die Fördereinrichtung 5, wobei sich eine Greifebene 6a der Greifeinrichtung 6 im Wesentlichen in der Anlageebene 5c der Fördereinrichtung 5 befindet.

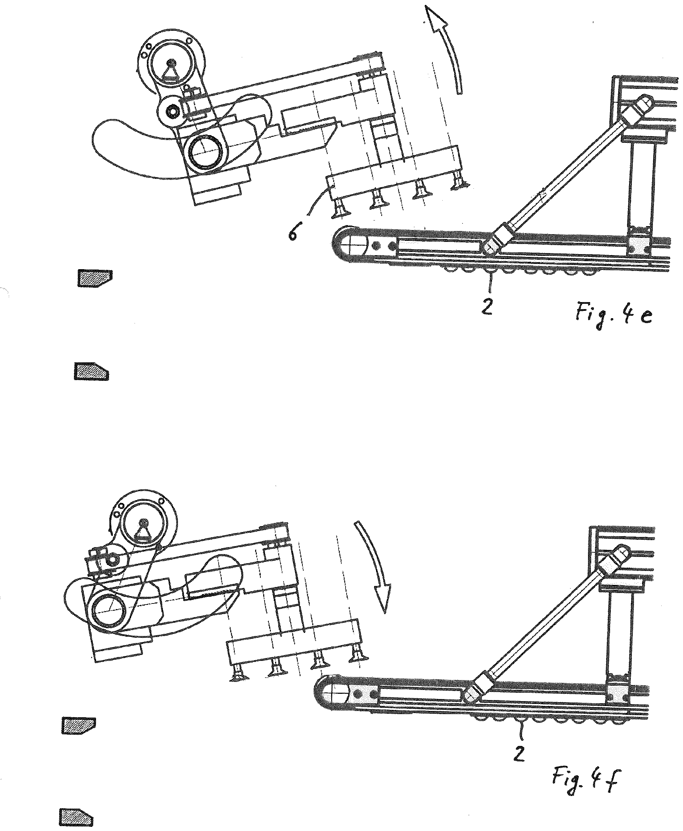

Fig. 4e zeigt, wie der Gegenstand 2 von der Fördereinrichtung 5 übernommen worden ist und die Greifeinrichtung 6 durch entsprechendes Verschwenken des zweiten Auslegers 18b und ggf. auch des ersten Auslegers 18a, die Fördereinrichtung 5 zwischen sich aufnehmend, an dieser nach oben vorbeibewegt wird. Dadurch, dass die Greifeinrichtung 6 nach oben bewegt wird, wird der Gegenstand 2 selbsttätig von der Greifeinrichtung 6 gelöst und an die Fördereinrichtung 5 übergeben.

Fig. 4f zeigt die Zurückbewegung der Greifeinrichtung 6 in Richtung der ersten Position A gemäß Fig. 4a. Wiederum wird die Greifeinrichtung 6 so an der Fördereinrichtung 5 vorbei bewegt, dass die beiden Reihen 6a von Greifelementen 7 beiderseits der Fördereinrichtung 5 vorbeigehen.

## Patentansprüche

1. Vorrichtung zum Umsetzen eines Gegenstands oder gleichzeitig mehrerer Gegenstände, wie Blisterverpackungen (2), von einer Bereitstellungsstelle (3) zu einem Ablageplatz (4), mit einer den Ablageplatz (4) aufweisenden Fördereinrichtung (5), mittels der die Gegenstände in einer Transportrichtung (5a) abtransportierbar sind,
mit einer Greifeinrichtung (6), die Greifelemente (7) aufweist,
und mit einer Positioniereinrichtung (9), mittels der die Greifeinrichtung (6) zum Aufnehmen der Gegenstände an der Bereitstellungsstelle (3) zum Abgeben der Gegenstände am Ablageplatz (4) positionierbar ist,
**dadurch gekennzeichnet, dass** die Positioniereinrichtung (9) einen um eine erste Schwenkachse (10a) schwenkbar gehaltenen ersten Ausleger (18a) und einen an dem ersten Ausleger (18a) um eine zweite Schwenkachse (10b) schwenkbar gelagerten zweiten Ausleger (18b) aufweist, wobei die erste Schwenkachse (10a) ortsfest an einem Grundgestell ausgebildet ist, wobei die zweite Schwenkachse (10b) parallel zu der ersten Schwenkachse (10a) angeordnet ist, wobei die Greifeinrichtung (6) an dem zweiten Ausleger (18b) um eine dritte, senkrecht zu der ersten Schwenkachse (10a) angeordnete Schwenkachse (10c) schwenkbar gelagert ist und zum Aufnehmen der Gegenstände an der Bereitstellungsstelle (3) zum Abgeben der Gegenstände am Ablageplatz (4) positionierbar ist,
dass die mehrere Greifelemente (7) der Greifeinrichtung (6) in zwei parallelen, einen Abstand voneinander aufweisenden Reihen (6a) nebeneinander angeordnet sind,
dass sich zwischen den Reihen (6a) von Greifelementen (7) eine Durchtrittsöffnung (16) in der Greifeinrichtung (6) befindet, die breiter als eine Breite der Fördereinrichtung (5), orthogonal zur Förderrichtung (5a) im Bereich des Ablageplatzes (4) gesehen, ist;
dass durch die Positioniereinrichtung (9) die Reihen (6a) von Greifelementen (7) beidseitig der Fördereinrichtung (5) auf jeweils einer Seite der Fördereinrichtung (5) vorbei bewegbar sind, und
dass die Greifeinrichtung (6) mittels der Positioniereinrichtung (9) zwischen einer ersten Position, in der die Reihen (6a) von Greifelementen (7) zum Aufnehmen mindestens eines Gegenstands an der Bereitstellungsstelle (3) dem mindestens einen Gegenstand (2) gegenüber liegen, und einer zweiten Position, in der sich die Reihen (6a) von Greifelementen (7) zur Übergabe des oder der Gegenstände an die Fördereinrichtung (5) in Transportrichtung (5a) erstrecken und dem Ablageplatz (4) gegenüber liegen, verschwenkbar ist, und mittels einer koordinierten Schwenkbewegung des ersten Auslegers (18a) um die erste Schwenkachse (10a) und des zweiten Auslegers (18b) um die zweite Schwenkachse (10b) translatorisch bewegbar ist.

2. Vorrichtung nach Anspruch 1, **dadurch gekennzeichnet, dass** die Reihen (6a) von Greifelementen (7) in der zweiten Position zur Übergabe der Gegenstände an die Fördereinrichtung (5) parallel zu der Längsachse (5b) der Fördereinrichtung (5) ausgerichtet sind.

3. Vorrichtung nach einem der vorhergehenden Ansprüche, **dadurch gekennzeichnet, dass** die Fördereinrichtung (5) am Ablageplatz (4) mindestens zwei quer zur Längsachse (5b) voneinander beabstandete Anlagestellen für die Gegenstände aufweist.

4. Vorrichtung nach einem der vorhergehenden Ansprüche, **dadurch gekennzeichnet, dass** die erste Schwenkachse (10a) zu einer von der Fördereinrichtung (5) festgelegten Anlageebene (5c) parallel ausgerichtet ist und senkrecht zu der Längsachse (5b) der Fördereinrichtung (5) angeordnet sein kann.

5. Vorrichtung nach einem der vorhergehenden Ansprüche, **dadurch gekennzeichnet, dass** in Bezug auf die oder jede Schwenkachse (10a, 10b, 10c) ein Motor vorgesehen ist, mittels dem eine Schwenkbewegung erzeugbar ist.

6. Vorrichtung nach einem der Ansprüche 1 bis 4, **dadurch gekennzeichnet, dass** ein einziger Motor vorgesehen ist, mit dem über ein Getriebe eine zwangsgesteuerte Bewegung des ersten Auslegers (18a), des zweiten Auslegers (18b) und/oder der Greifeinrichtung (6) erzeugbar ist.

7. Vorrichtung nach einem der vorhergehenden Ansprüche, **dadurch gekennzeichnet, dass** die Greifelemente (7) der Greifeinrichtung (6) mechanische oder magnetische Greifmittel oder Saugmittel sind.

8. Vorrichtung nach einem der vorhergehenden Ansprüche, wobei die Fördereinrichtung (5) Haltemittel für die Gegenstände aufweist, die durch Saugelemente, Greifelemente oder Magnetelemente, insbesondere durch parallel zueinander verlaufende Saugbänder (15) gebildet sein können, an denen die Anlagestellen für die Gegenstände ausgebildet sind, etwa in Form von Saugnapfreihen.

9. Vorrichtung nach einem der vorhergehenden Ansprüche, wobei sich die Fördereinrichtung (5) in einer horizontalen Richtung erstreckt, und die Greifeinrichtung (6) durch die Positioniereinrichtung (9) quer dazu, insbesondere vertikal an der Fördereinrichtung vorbei bewegbar ist.

10. Vorrichtung nach einem der vorhergehenden Ansprüche, **dadurch gekennzeichnet, dass** die Greifeinrichtung (6) im Wesentlichen U-förmig ist, wobei die Reihen (6a) von Greifelementen (7) im Wesentlichen parallel zueinander verlaufen und mittels eines Verbindungsstegs miteinander verbunden sind.

11. Vorrichtung nach einem der vorhergehenden Ansprüche, **dadurch gekennzeichnet, dass** der Bereitstellungsplatz (3) ein Ende einer Fördereinheit oder ein Magazin für die Bereitstellung von Gegenständen (2) ist und wobei die Gegenstände (2) an dem Bereitstellungsplatz (3) in einer Ebene angeordnet sein können, die orthogonal zu der Anlageebene (10c) auf dem Ablageplatz (4) ist.

12. Verfahren zum Umsetzen von Gegenständen mit einer Vorrichtung nach einem der vorhergehenden Ansprüche, mit den Schritten:
a) Bereitstellen eines Gegenstands (2) an einer Bereitstellungsstelle (3);
b) Bewegen der Greifeinrichtung (6) zu der Bereitstellungsstelle (3) und Greifen des Gegenstands mittels der Greifeinrichtung (6);
c) Schwenken des ersten Auslegers (18a) um die erste Schwenkachse (10a);
c1) Schwenken eines zweiten Auslegers (18b) um eine zweite Schwenkachse (10b), wobei durch ein koordiniertes Schwenken des ersten Auslegers (18a) und des zweiten Auslegers (18b) eine translatorische Bewegung der Greifeinrichtung (6) bei der Übergabe des Gegenstands (2) von der Greifeinrichtung (6) an die Fördereinrichtung (5) erzeugt wird;
d) Rotieren der Greifeinrichtung (6) um die dritte Schwenkachse (10c);
e) Entlangbewegen der Greifeinrichtung (6) an der Fördereinrichtung (5), wobei eine Reihe (6a) von Greifelementen (7) auf einer Seite der Fördereinrichtung (5) vorbeigeführt wird und die andere Reihe auf der gegenüberliegenden Seite,
f) Übergeben des Gegenstands (2) von der Greifeinrichtung (6) an die Fördereinrichtung (5),
g) Abtransportieren des Gegenstands (2) mittels der Fördereinrichtung (5).

## Claims

1. Device for transferring an object or several objects simultaneously, such as blister packs (2), from a supply location (3) to a deposit location (4), with a conveyor device (5) which has the deposit location (4) and by means of which the objects can be transported away in a direction of transportation (5a),
with a gripper device (6) that has gripper elements (7),
and with a positioning device (9) by means of which the gripper device (6) can be positioned to pick up the objects at the supply location (3) for delivering the objects at the deposit location (4),
**characterised in that** the positioning device (9) has a first arm (18a) that is held such that it can be pivoted around a first pivot axis (10a) and a second arm (18b) that can be pivoted on the first arm (18a) around a second pivot axis (10b),
wherein the first pivot axis (10a) is designed to be fixed on a base frame, wherein the second pivot axis (10b) is arranged parallel to the first pivot axis (10a),
wherein the gripper device (6) is held on the second arm (18b) such that it can be pivoted around a third pivot axis (10c) arranged perpendicular to the first pivot axis (10a), and can be positioned to pick up the objects at the supply location (3) to deliver the objects at the deposit location (4),
that the plurality of gripper elements (7) of the gripper device (6) are arranged alongside one another in two parallel rows (6a) that are spaced apart from one another, that located between the rows (6a) of gripper elements (7) is an opening (16) in the gripper device (6) which is wider than the width of the conveyor device (5), as seen orthogonally to the direction of transportation (5a) in the area of the deposit location (4);
that through the positioning device (9), the rows (6a) of gripper elements (7) on both sides of the conveyor device (5) can be moved respectively past one side of the conveyor device (5), and
that by means of the positioning device (9), the gripper device (6) can be pivoted between a first position in which the rows (6a) of gripper elements (7) for picking up at least one object at the supply location (3) lie opposite the at least one object (2), and a second position in which the rows (6a) of gripper elements (7) for delivering the object or objects to the conveyor device (5) extend in the direction of transportation (5a) and lie opposite the deposit location (4), and
can be moved by means of a coordinated pivoting movement of the first arm (18a) around the first pivot axis (10a) and of the second arm (18b) around the second pivot axis (10b) in a translational manner.

2. Device according to claim 1, **characterised in that** the rows (6a) of gripper elements (7) in the second position for handing over the objects to the conveyor device (5) are aligned parallel to the longitudinal axis (5b) of the conveyor device (5).

3. Device according to one of the preceding claims, **characterised in that** at the deposit location (4), the conveyor device (5) has at least two landing points, spaced apart from one another, crosswise to the longitudinal axis (5b) for the objects.

4. Device according to one of the preceding claims, **characterised in that** the first pivot axis (10a) is aligned parallel to a support plane (5c) that is defined by the conveyor device (5) and that can be arranged perpendicular to the longitudinal axis (5b) of the conveyor device (5).

5. Device according to one of the preceding claims, **characterised in that** in relation to the pivot axis or each pivot axis (10a, 10b, 10c), a motor is provided, by means of which a pivoting movement can be created.

6. Device according to one of the claims 1 to 4, **characterised in that** a single motor is provided, with which via a transmission, a positively controlled movement of the first arm (18a), the second arm (18b) and/or the gripper device (6) can be produced.

7. Device according to one of the preceding claims, **characterised in that** the gripper elements (7) of the gripper device (6) are mechanical or magnetic gripping means or suction means.

8. Device according to one of the preceding claims, wherein the conveyor device (5) has holding means for the objects, which can be formed by suction elements, gripper elements or magnet elements, in particular which can be formed by suction belts (15) running parallel to one another, formed on which are the landing points for the objects, for example in the form of rows of suction cups.

9. Device according to one of the preceding claims, wherein the conveyor device (5) extends in a horizontal direction, and the gripper device (6) can be moved by the positioning device (9) crosswise to it, in particular vertically past the conveyor device.

10. Device according to one of the preceding claims, **characterised in that** the gripper device (6) is essentially U-shaped, wherein the rows (6a) of gripper elements (7) run essentially parallel to one another and are connected to one another by means of a connecting bridge.

11. Device according to one of the preceding claims, **characterised in that** the supply location (3) is one end of a conveyor unit or a magazine for the provision of objects (2) and wherein the objects (2) can be arranged at the supply location (3) in a plane that is orthogonal to the support plane (10c) on the deposit location (4).

12. Method for transferring objects with a device according to one of the preceding claims, with the steps:
a) provision of an object (2) at a supply location (3);
b) movement of the gripper device (6) to the supply location (3) and gripping of the object by means of the gripper device (6);
c) pivoting of the first arm (18a) around the first pivot axis (10a);
c1) pivoting of a second arm (18b) around a second pivot axis (10b), wherein through coordinated pivoting of the first arm (18a) and of the second arm (18b), a translational movement of the gripper device (6) is created when the object (2) is handed over by the gripper device (6) to the conveyor device (5);
d) rotation of the gripper device (6) around the third pivot axis (10c);
e) moving the gripper device (6) along the conveyor device (5), wherein a row (6a) of gripper elements (7) is led past one side of the conveyor device (5) and the other row on the opposite side,
f) handover of the object (2) by the gripper device (6) to the conveyor device (5),
g) carrying away of the object (2) by means of the conveyor device (5).

## Revendications

1. Dispositif de transfert simultané d'un ou plusieurs objets comme, par exemple, des blisters (2), depuis un point d'alimentation (3) jusqu'à un point de dépôt (4), à l'aide d'un dispositif de convoyage (5) qui aboutit au point de dépôt (4) et qui assure l'acheminement des objets dans le sens de transport (5a),
avec un dispositif de saisie (6) qui a des éléments de saisie (7),
et avec un dispositif de positionnement (9) qui permet au dispositif de saisie (6) de se positionner pour saisir les objets au niveau du point d'alimentation (3) et d'acheminer ces objets jusqu'au point de dépôt (4),
**se caractérisant par le fait que** le dispositif de positionnement (9) a un premier bras (18a) qui est maintenu de façon à pouvoir pivoter autour d'un premier axe pivot (10a) et un deuxième bras (18b) qui peut pivoter sur le premier bras (18a) autour d'un deuxième axe pivot (10b),
et ce premier axe pivot (10a) est conçu pour se fixer sur un châssis, et le deuxième axe pivot (10b) est parallèle au premier axe pivot (10a),
et le dispositif de saisie (6) vient se fixer sur le deuxième bras (18b) de telle sorte qu'il peut pivoter autour d'un troisième axe pivot (10c) implanté à la perpendiculaire du premier axe pivot (10a) et peut se positionner de manière à saisir les objets au niveau du point d'alimentation (3) et à les livrer au niveau du point de dépôt (4),
et la pluralité d'éléments de saisie (7) du dispositif de saisie (6) est disposée aux côtés les uns des autres dans deux rangées parallèles (6a) espacées l'une de l'autre,
et entre ces rangées (6a) d'éléments de saisie (7), il y a une ouverture (16) dans le dispositif de saisie (6) dont la largeur est supérieure à celle du dispositif de convoyage (5), lorsqu'on regarde ces éléments sur le plan orthogonal, dans le sens de transport (5a), dans la zone du point de dépôt (4)
au travers du dispositif de positionnement (9), les rangées (6a) d'éléments de saisie (7) de part et d'autre du dispositif de convoyage (5) peuvent se déplacer, respectivement, sur un côté du dispositif de convoyage (5) et,
par le biais du dispositif de positionnement (9), le dispositif de saisie (6) peut pivoter entre une première position au niveau de laquelle les rangées (6a) d'éléments de saisie (7) conçus pour saisir au moins un objet au niveau du point d'alimentation (3) viennent se placer en face d'au moins un objet (2) et une deuxième position au niveau de laquelle les rangées (6a) d'éléments de saisie (7) conçus pour livrer le ou les objets au dispositif de convoyage (5) se déploient dans le sens du transport (5a) et viennent se placer en face du point de dépôt (4) et
peuvent se déplacer par le biais d'un mouvement pivotant coordonné du premier bras (18a) autour du premier axe pivot (10a) et du deuxième bras (18b) autour du deuxième axe pivot (10b) par le biais d'une translation.

2. Le dispositif que décrit la revendication 1, et qui se **caractérise par le fait que** les rangées (6a) d'éléments de saisie (7) au niveau de la deuxième position de transfert des objets au dispositif de convoyage (5) sont alignées et parallèles à l'axe longitudinal (5b) du dispositif de convoyage (5).

3. Le dispositif que décrit l'une ou l'autre des revendications précédentes, et qui se **caractérise par le fait qu'**au point de dépôt (4), le dispositif de convoyage (5) a au moins deux points d'atterrissage espacés l'un de l'autre, dans le sens transversal par rapport à l'axe longitudinal (5b) pour les objets.

4. Le dispositif que décrit l'une ou l'autre des revendications précédentes, et qui se **caractérise par le fait que** le premier axe pivot (10a) est aligné et parallèle à un plan de soutien (5c) qui est défini par le dispositif de convoyage (5) et qui peut être implanté à la perpendiculaire de l'axe longitudinal (5b) du dispositif de convoyage (5).

5. Le dispositif que décrit l'une ou l'autre des revendications précédentes, et qui se **caractérise par le fait que**, par rapport à l'axe pivot ou à chaque axe pivot (10a, 10b, 10c), un moteur est fourni, ce qui permet de créer un mouvement pivotant.

6. Le dispositif que décrit l'une ou l'autre des revendications 1 à 4, et qui se **caractérise par le fait qu'**un moteur unique est prévu, ce qui permet, par le biais d'une transmission, de produire un mouvement à contrôle positif du premier bras (18a), du deuxième bras (18b) et (ou) du dispositif de saisie (6).

7. Le dispositif que décrit l'une ou l'autre des revendications précédentes, et qui se **caractérise par le fait que** les éléments de saisie (7) du dispositif de saisie (6) sont des moyens mécaniques ou magnétiques de saisie ou des moyens aspirants.

8. Le dispositif que décrit l'une ou l'autre des revendications précédentes, si ce n'est que le dispositif de convoyage (5) a des moyens de maintien en place des objets, qui peuvent se composer d'éléments aspirants, d'éléments de saisie ou d'éléments magnétiques, en particulier, qui peuvent se composer de ceintures aspirantes (15) déployées parallèlement les unes aux autres, qui viennent se positionner sur les points d'atterrissage des objets, par exemple sous la forme de rangées de ventouses.

9. Le dispositif que décrit l'une ou l'autre des revendications précédentes, si ce n'est que le dispositif de convoyage (5) se déploie dans un sens horizontal, et que le dispositif de saisie (6) peut être déplacé par le dispositif de positionnement (9) en travers, en particulier à la verticale et au-delà du dispositif de convoyage.

10. Le dispositif que décrit l'une ou l'autre des revendications précédentes, et qui se **caractérise par le fait que** le dispositif de saisie (6) est essentiellement en forme de U, et si ce n'est que les rangées (6a) d'éléments de saisie (7) sont essentiellement parallèles l'une à l'autre et sont reliées l'une à l'autre par une passerelle de raccordement.

11. Le dispositif que décrit l'une ou l'autre des revendications précédentes, et qui se **caractérise par le fait que** le point d'alimentation (3) est une extrémité du groupe de convoyage ou un magasin de fourniture d'objets (2) et si ce n'est que les objets (2) peuvent se positionner au niveau du point d'alimentation (3) sur un plan orthogonal par rapport au plan de soutien (10c) au niveau du point de dépôt (4).

12. Procédé de transfert d'objets à l'aide d'un dispositif que décrit l'une ou l'autre des revendications précédentes, et ce procédé se compose des étapes suivantes :
a) fourniture d'un objet (2) à un point d'alimentation (3)
b) déplacement du dispositif de saisie (6) jusqu'au point d'alimentation (3) et saisie de l'objet par le dispositif de saisie (6)
c) pivotement du premier bras (18a) autour du premier axe pivot(10a)
c1) pivotement du deuxième bras (18b) autour d'un deuxième axe pivot (10b) et, par le biais du pivotement coordonné du premier bras (18a) et du deuxième bras (18b), un déplacement par translation du dispositif de saisie (6) a lieu lorsque l'objet (2) est transféré par le dispositif de saisie (6) au dispositif de convoyage (5)
d) rotation du dispositif de saisie (6) autour du troisième axe pivot (10c)
e) déplacement du dispositif de saisie (6) le long du dispositif de convoyage (5), et une rangée (6a) d'éléments de saisie (7) est acheminée sur un côté du dispositif de convoyage (5) et l'autre rangée est acheminée de l'autre côté
f) transfert de l'objet (2) par le dispositif de saisie (6) au dispositif de convoyage (5)
g) retrait de l'objet (2) par le dispositif de convoyage (5).
